# EUROPEAN PATENT SPECIFICATION

(11) **EP 3 038 088 B1**
(45) Date of publication and mention of the grant of the patent: **31.07.2019**
(21) Application number: 15196554.8
(22) Date of filing: 26.11.2015
(51) Int. Cl.: G09G 3/32

(54) **DISPLAY DEVICE AND DATA DRIVER**
ANZEIGEVORRICHTUNG UND DATENTREIBER
DISPOSITIF D'AFFICHAGE ET DE COMMANDE DE DONNÉES

(30) Priority: 24.12.2014 KR 20140188194
(43) Date of publication of application: 29.06.2016
(73) Proprietor: LG Display Co., Ltd., Seoul 07336 (KR)
(72) Inventor: KWON, OhJong, 134-8409 Seoul (KR); PARK, SungWoo, 621-280 Gyeongsangnam-do (KR)
(74) Representative: Ter Meer Steinmeister & Partner

(56) References cited:
- KR-A- 20030 075 107
- US-A1- 2003 164 812
- US-A1- 2009 040 083
- US-A1- 2012 044 235
- US-A1- 2013 169 699

## Description

This application claims priority from KR Application 10-2014-0188194 filed on Dec. 24, 2014.

The present invention relates to a display device that displays images, to a data driver and a method for driving the same.

In response to the growth of the information society, there is increasing demand for various types of display device able to display images. Various display devices, such as liquid crystal displays (LCDs), plasma display panels (PDPs), and organic light-emitting diode (OLED) display devices, are currently used.

Such display devices include a display panel on which data lines and gate lines intersect each other and subpixels are defined at the intersection points of the data lines and the gate lines. The display device further includes a data driver supplying data signals to the data lines and a gate driver supplying gate signals to the gate lines.

A transistor is disposed in each of the subpixels defined on the display panel. The characteristics of the transistor within each subpixel may change according to the operation time or may differ from those of the transistor within the other subpixel. In addition, when the display device is an OLED display device, OLEDs in the subpixels may deteriorate at different rates. This phenomenon may cause non-uniform luminance in the subpixels, thereby degrading image quality.

Therefore, in order to address the issue of non-uniform luminance of the subpixels, pixel compensation technology for compensating for a change or difference in the characteristics of devices (e.g. a transistor or an OLED) within circuits has been proposed. For instance, the US 2012/0044235 A1 describes a compensation of a display panel. Therein, a detecting of deterioration information is used to generate a deterioration compensation signal for correcting input data to a data driver.

This pixel compensation technology is a technology intended to prevent or reduce the incidence of non-uniformity in terms of the luminance between subpixels.

However, although this pixel compensation function is provided, a phenomenon in which the luminance of each subpixel or the difference in the levels of luminance between the subpixels is not compensated may remain.

In addition, the data driver may have an output error, or when the data driver includes two or more data driver integrated circuits (DICs), the DICs may have a difference in outputs.

### BRIEF SUMMARY OF THE INVENTION

Various aspects of the present invention are intended to overcome the problem in that the luminance of each subpixel or the difference in the levels of luminance between subpixels is not compensated although the pixel compensation function is provided.

The present invention is also intended to address the issue of an output error of a data driver, or when the data driver includes two or more data driver integrated circuits (DICs), output differences of the DICs.

These problems are solved by the features of the independent claims. Advantageous embodiments thereof are described in the respective dependent claims. Preferably, a display device is provided that includes: a display panel having subpixels disposed at points where data lines intersect gate lines; a data driver supplying a data voltage corresponding to specific input data to the data lines; an analog-to-digital converter (ADC) sensing the data voltage supplied to at least one data line of the data lines, and converting the sensed data voltage to digital sensed data; and a timing controller supplying compensation data compensated based on the digital sensed data to the data driver, thereby compensating for a deviation of the data driver.

In addition, according to the present invention, it is possible to compensate for an output error of the data driver, or when the data driver includes two or more DICs, compensate for output differences of the DICs.

### BRIEF DESCRIPTION OF THE DRAWINGS

The above and other objects, features and advantages of the present invention will be more clearly understood from the following detailed description when taken in conjunction with the accompanying drawings, in which:
FIG. 1 is a schematic diagram illustrating the system configuration of a display device according to an exemplary embodiment of the present invention;
FIG. 2 is a schematic diagram illustrating one of the DICs of the data driver in the display device according to an exemplary embodiment of the present invention;
FIG. 3 and FIG. 4 are conceptual diagrams illustrating pixel compensation in the display device according to an exemplary embodiment of the present invention;
FIG. 5 is a conceptual diagram illustrating sensing and conversion functions of the ADC in the display device according to an exemplary embodiment of the present invention;
FIG. 6 is a diagram illustrating the range of an input voltage and the range of output data of the ADC in the display device according to an exemplary embodiment of the present invention;
FIG. 7 is a graph illustrating the input-output relationship and the characteristics information of the ADC in the display device according to an exemplary embodiment of the present invention;
FIG. 8 is a diagram illustrating the data driver including three DICs in the display device 100 according to an exemplary embodiment of the present invention;
FIG. 9 is a diagram illustrating changes in the ADC characteristics in the display device according to an exemplary embodiment of the present invention;
FIG. 10 is a schematic diagram illustrating a configuration for compensating for a change in the ADC characteristics in the display device according to an exemplary embodiment of the present invention;
FIG. 11 is a conceptual diagram illustrating pixel compensation to which ADC compensation is applied in the display device 100 according to an exemplary embodiment of the present invention;
FIG. 12A and FIG. 12B are diagrams illustrating two ADC compensation methods in the display device according to an exemplary embodiment of the present invention;
FIG. 13 is a diagram illustrating a subpixel structure, an ADC and a sensing line when the display device according to an exemplary embodiment of the present invention is an OLED display device;
FIG. 14 is a diagram illustrating the DIC output compensation of the display device according to an exemplary embodiment of the present invention;
FIG. 15 is a detailed configuration diagram illustrating the data driver including three DICs as illustrated in FIG. 8;
FIG. 16 illustrates the differences between the DICs in the display device according to an exemplary embodiment of the present invention;
FIG. 17 is a schematic configuration diagram illustrating compensation for the differences between the DICs in the display device according to an exemplary embodiment of the invention after the changes in the ADC characteristics are compensated; and
FIG. 18 is a conceptual view illustrating pixel compensation in the display device according to an exemplary embodiment of the invention to which compensation for the differences between the DICs is applied after the ADC compensation.

### DETAILED DESCRIPTION OF THE INVENTION

Reference will now be made in detail to the present invention, embodiments of which are illustrated in the accompanying drawings. Throughout this document, reference should be made to the drawings, in which the same reference numerals and signs may be used throughout the different drawings to designate the same or similar components. In the following description of the present invention, detailed descriptions of known functions and components incorporated herein will be omitted in the case that the subject matter of the present invention may be rendered unclear thereby.

It will also be understood that, although terms such as "first," "second," "A," "B," "(a)" and "(b)" may be used herein to describe various elements, such terms are only used to distinguish one element from another element. The substance, sequence, order or number of these elements is not limited by these terms. It will be understood that when an element is referred to as being "connected to" or "coupled to" another element, not only can it be "directly connected" or "coupled to" the other element, but also can it be "indirectly connected or coupled to" the other element via an "intervening" element. In the same context, it will be understood that when an element is referred to as being formed "on" or "under" another element, not only can it be directly formed on or under another element, but also can it be indirectly formed on or under another element via an intervening element.

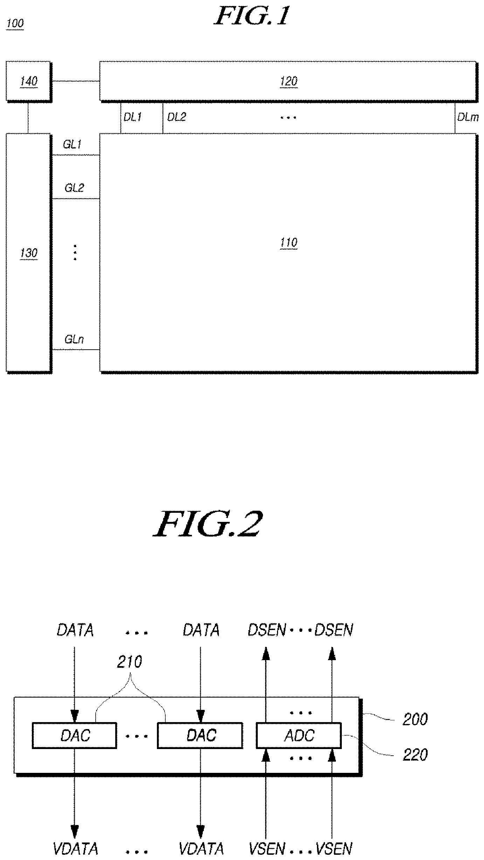

FIG. 1 is a schematic diagram illustrating the system configuration of a display device 100 according to an exemplary embodiment of the present invention.

Referring to FIG. 1, the display device 100 according to an exemplary embodiment includes a display panel 110, a data driver 120, a gate driver 130 and a timing controller 140.

Data lines DL1, DL2, ..., and DLm as well as gate lines GL1, GL2, ..., and GLn are formed on the display panel 110, and subpixels (SPs) are formed at points where the data lines DL1 to DLm intersect the gate lines GL1 to GLn, respectively.

The data driver 120 supplies data voltages to the data lines DL1 to DLm. The data driver 120 includes two or more data driver integrated circuits (DICs) (200, see FIG. 2).

The gate driver 130 sequentially supplies scanning signals to the gate lines GL1 to GLn.

The timing controller 140 controls the data driver 120 and the gate driver 130.

In addition, each of the subpixels formed on the display panel 110 is provided with a circuit including at least one transistor. The circuit within each of the subpixels may further include other devices, such as at least one capacitor and at least one organic light-emitting diode (OLED), in addition to the at least one transistor depending on the design of the circuit or the type of the display device.

The display device 100 according to an exemplary embodiment provides a "pixel compensation function" to compensate for the difference in the luminance between the subpixels that is caused by a change or difference in the characteristics (e.g. a threshold voltage or mobility) between the transistors within the subpixels.

In addition, when a sensing result for pixel compensation is inaccurate even if the pixel compensation function is provided, the display device 100 according to an exemplary embodiment provides a "sensing unit compensation function" to compensate for the sensing result in order to achieve accurate pixel compensation.

In addition, the display device 100 according to an exemplary embodiment provides a "DIC output compensation function" to compensate for an output error of the data driver or a "deviation compensation function for each DIC" to compensate for an output deviation by monitoring the output of each DIC when the data driver includes two or more DICs.

Hereinafter, the "pixel compensation function" will be described first, and subsequently the necessity of the "sensing unit compensation function" and its operation will be described in detail with reference to the drawings.

The display device 100 according to an exemplary embodiment requires a configuration for sensing the characteristics of the transistors of the circuits within the subpixels in order to provide the pixel compensation function.

Accordingly, the display panel 110 is provided with "sensing lines (SL)" connected to circuits within the subpixels. A single sensing line is provided for one or more rows of the sub-pixels.

The sensing lines may be disposed parallel to the data lines. In addition, a single sensing line may be provided on one subpixel row or two or more subpixel rows.

For example, when a shared structure, in which a single sensing line is provided for two or more subpixel rows, is applied, the single sensing line may be provided for three subpixel rows (a red subpixel row, a green subpixel row and a blue subpixel row). When a single pixel consists of three subpixels (a red subpixel (R), a green subpixel (G) and a blue subpixel (B)), a single sensing line can be regarded as being provided for every pixel row.

For another example, a single sensing line can be provided for four subpixel rows (a red subpixel row, a white subpixel row, a green subpixel row and a blue subpixel row). That is, when a single pixel consists of four subpixels (a red subpixel row (R), a white subpixel row (W), a green subpixel row (G) and a blue subpixel row (B)), a single sensing line can be regarded as being provided for every pixel row.

In addition, the display device 100 according to an exemplary embodiment can further include "sensing units" and a "pixel compensation unit" in addition to the "sensing lines" in order to provide the pixel compensation function. The sensing units convert sensed voltages Vsen measured through the sensing lines SL to digital sensed data Dsen. The pixel compensation unit converts data to be supplied to the subpixels for the pixel compensation based on the sensed data that has been sensed by and output from the sensing unit.

Hereinafter, the above-mentioned sensing units will also be referred to as analog-to-digital converters, or shortly, as "ADCs." Although the ADCs may be disposed at any position within the display device 100, the ADCs will be described and illustrated as being disposed within the DICs, respectively, by way of example throughout the specification and the drawings.

In addition, although the above-mentioned pixel compensation unit may be disposed at any position within the display device 100, the pixel compensation unit will be described and illustrated by way of example as being disposed within the timing controller 140 throughout the specification and the drawings.

FIG. 2 is a schematic diagram illustrating one of the DICs 200 of the data driver 120 in the display device 100 according to an exemplary embodiment.

Referring to FIG. 2, each of the DICs 200 includes a driving section supplying data voltages Vdata to a plurality of subpixels that the DIC 200 controls and a sensing section for the plurality of subpixels.

Each of the DICs 200 includes a digital-to-analog converter (hereinafter referred to as a "DAC") 210 that converts data input from the timing controller 140 to analog data Vdata.

Each of the DICs 200 further includes an ADC 220. The ADC 220 senses voltages Vsen in sensing nodes of circuits within the plurality of subpixels that the ADC 220 controls through two or more sensing lines (that may be conceptually identical to sensing channels), converts the sensed voltages Vsen to digital sensed data Dsen, and then outputs the digital sensed data Dsen.

As illustrated in FIG. 2, one DIC 200 includes one ADC 220. Therefore, when the display device 100 has two or more DICs 200, two or more ADCs 220 are provided in the display device 100.

The single ADC 220 of one DIC 200 is connected to two or more sensing lines SL, and senses voltages Vsen through the sensing lines.

Here, one sensing line SL connects the ADC 220 to one or more subpixels. Specifically, each sensing line of two or more sensing lines connected to one ADC 220 may be a line that senses a voltage in a sensing node of a circuit within one subpixel, or in a shared structure, a line that simultaneously or sequentially senses voltages in sensing nodes of circuits within two or more subpixels.

The ADC 220 of one DIC 200 outputs digital sensed data Dsen converted from the one or more sensed voltages Vsen that are measured through the one or more sensing channels corresponding to the two or more sensing lines.

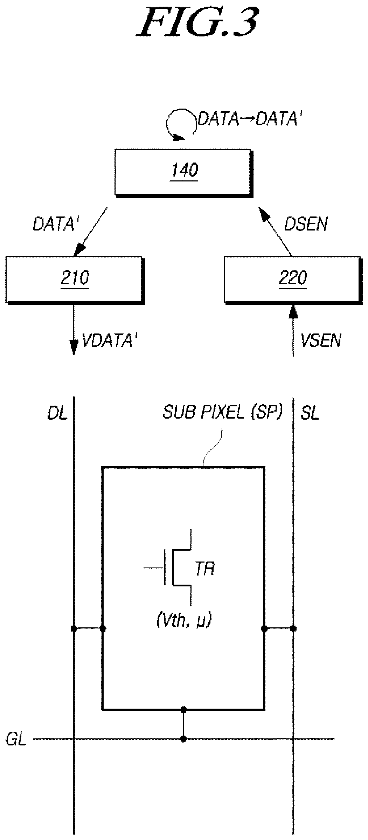

FIG. 3 is a conceptual diagram illustrating pixel compensation in the display device 100 according to an exemplary embodiment.

Referring to FIG. 3, the ADC 220 within the DIC 200 senses a voltage Vsen in a sensing node (e.g. a source or drain node of a transistor) on a circuit within a subpixel SP through a sensing line SL connected to the circuit within the subpixel SP, converts the sensed voltage to digital sensed data, and then outputs the digital sensed data.

The timing controller 140 changes data Data to be supplied to the subpixel SP using the sensed data Dsen and subsequently outputs changed data Data' in order to compensate for the characteristics (e.g. a threshold voltage Vth or mobility µ) of a transistor TR within the subpixel SP.

Consequently, the DAC 210 in the DIC 200 converts the changed data Data' to a data voltage Vdata' and subsequently outputs the data voltage Vdata'.

Accordingly, the data voltage Vdata' with which the characteristics of the transistor TR can be compensated is supplied to the subpixel SP through the data line DL, whereby the non-uniformity of the luminance of the subpixel SP can be prevented or reduced.

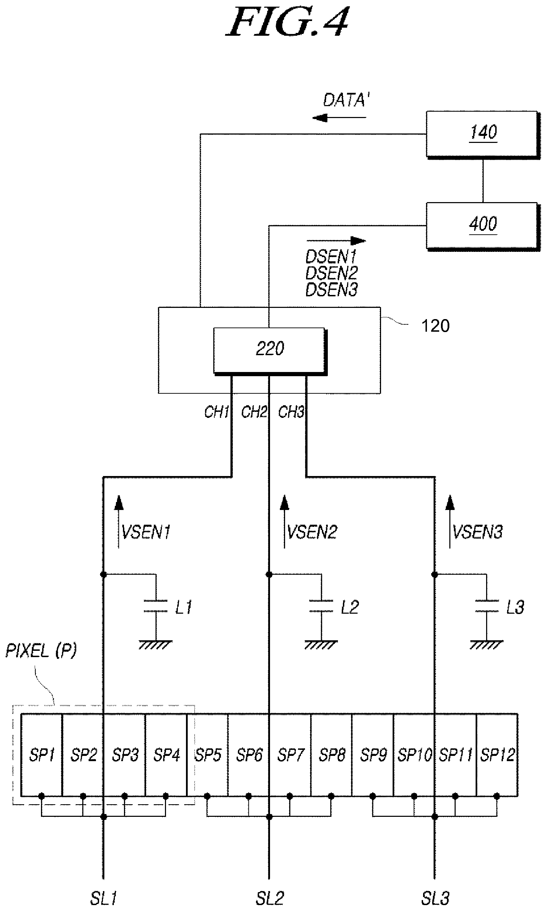

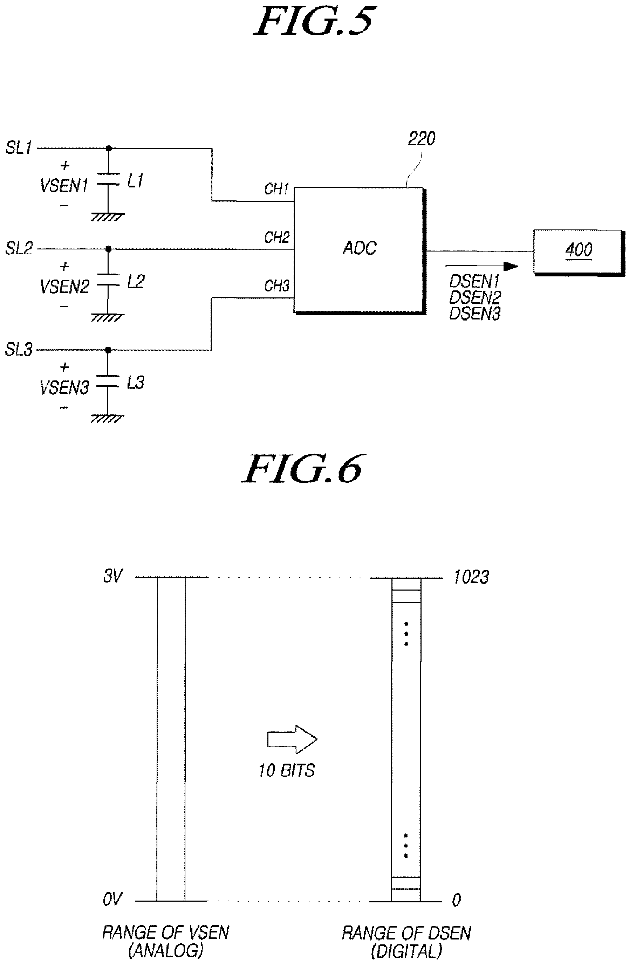

The pixel compensation that has been described in brief with reference to FIG. 3 will be described in greater detail with reference to FIG. 4 and FIG. 5.

FIG. 4 is a diagram illustrating the pixel compensation in the display device 100 according to an exemplary embodiment, and FIG. 5 is a conceptual diagram illustrating sensing and conversion functions of the ADC 220 in the display device 100 according to an exemplary embodiment.

As illustrated in FIG. 4, one ADC 220 has three sensing channels CH1, CH2, and CH3. The three sensing channels CH1, CH2, and CH3 are connected to three sensing lines SL1, SL2, and SL3 in one-to-one correspondence. Each of the three sensing channels CH1, CH2 and CH3 is connected to four subpixels SP. Specifically, the sensing channel CH1 and the corresponding sensing line SL1 are connected to and shared by the subpixels SP1, SP2, SP3, and SP4. The sensing channel CH2 and the corresponding sensing line SL2 are connected to and shared by the subpixels SP5, SP6, SP7, and SP8. The sensing channel CH3 and the corresponding sensing line SL3 are connected to and shared by the subpixels SP9, SP10, SP11, and SP12. Four subpixels SP constitute a single pixel P.

For example, the four subpixels SP may include a red subpixel (R), a white subpixel (W), a green subpixel (G), and a blue subpixel (B). For example, the subpixels SP1, SP5, and SP9 may be the red subpixels (R), the subpixels SP2, SP6, and SP10 may be the white subpixels (W), the subpixels SP3, SP7, and SP11 may be green subpixels (G), and the subpixels SP4, SP8, and SP12 may be the blue subpixels (B).

Referring to FIG. 4, the ADC 220 senses a voltage Vsen at a sensing node in each subpixel SP through the three sensing lines SL1, SL2, and SL3 at one point of time.

For example, at a first point of time, the ADC 220 can sense a voltage Vsen1 at a sensing node of a circuit within one subpixel, for example, the subpixel SP1, from among the four sub-pixels SP1, SP2, SP3, and SP4 connected to the sensing line SL1 through the sensing line SL1.

In addition, the ADC 220 can sense a voltage Vsen2 at a sensing node of a circuit within one subpixel, for example, the subpixel SP5, from among the four subpixels SP5, SP6, SP7, and SP8 connected to the sensing line SL2 through the sensing line SL2. Furthermore, the ADC 220 can sense a voltage Vsen3 at a sensing node of a circuit within one subpixel, for example, the subpixel SP9, from among the four subpixels SP9, SP10, SP11, and SP12 connected to the sensing line SL3 through the sensing line SL3. After the first point of time, at a second point of time, the ADC 220 can sense a voltage Vsen1 at a sensing node of a circuit within another subpixel, for example, the subpixel SP2, from among the four subpixels SP1, SP2, SP3, and SP4 connected to the sensing line SL1 through the sensing line SL1.

In addition, the ADC 220 can sense a voltage Vsen2 at a sensing node of a circuit within another subpixel, for example, the subpixel SP6, from among the four subpixels SP5, SP6, SP7, and SP8 connected to the sensing line SL2 through the sensing line SL2.

Furthermore, the ADC 220 can sense a voltage Vsen3 in a sensing node of a circuit within another subpixel, for example, the subpixel SP10, from among the four subpixels SP9, SP10, SP11, and SP12 connected to the sensing line SL3 through the sensing line SL3.

In other words, at the first point of time, the ADC 220 can simultaneously sense the voltages Vsen1, Vsen2, and Vsen3 at the sensing nodes within the circuits of the subpixels SP1, SP5, and SP9 corresponding to the red subpixels (R) through the sensing lines SL1, SL2, and SL3. At the second point of time, the ADC 220 can simultaneously sense the voltages Vsen1, Vsen2, and Vsen3 at the sensing nodes within the circuits of the subpixels SP2, SP6, and SP10 corresponding to the white subpixels (W) through the sensing lines SL1, SL2, and SL3. In addition, at a third point of time, the ADC 220 can simultaneously sense voltages Vsen1, Vsen2, and Vsen3 at sensing nodes within circuits of the subpixels SP3, SP7, and SP11 corresponding to the green subpixels (G) through the sensing lines SL1, SL2, and SL3. Furthermore, at a fourth point of time, the ADC 220 can simultaneously sense voltages Vsen1, Vsen2, and Vsen3 at sensing nodes within circuits of the subpixels SP4, SP8, and SP12 corresponding to the blue subpixels (B), through the sensing lines SL1, SL2, and SL3.

Referring to FIG. 4 and FIG. 5, latches L1, L2, and L3 are connected to the three sensing lines SL1, SL2, and SL3, respectively. The voltages Vsen sensed at the sensing nodes within the corresponding subpixels are stored in the latches L1, L2, and L3.

Specifically, the voltage Vsen1 sensed at the sensing node within a subpixel to be sensed from among the four subpixels SP1, SP2, SP3, and SP4 connected to the sensing line SL1 is stored in the latch L1 connected to the sensing line SL1. The sensed voltage Vsen2 sensed at the sensing node within the subpixel from among the four subpixels SP5, SP6, SP7, and SP8 connected to the sensing line SL2 is stored in the latch L2 connected to the sensing line SL2. The voltage Vsen3 sensed at the sensing node within the subpixel to be sensed from among the four subpixels SP9, SP10, SP11, and SP12 connected to the sensing line SL3 is stored in the latch L3 connected to the sensing line SL3. Each of the above-mentioned latches L1, L2, and L3 may be implemented as a capacitor, as illustrated in FIG. 4.

Referring to FIG. 4 and FIG. 5, the ADC 220 can simultaneously or sequentially measure the sensed voltages Vsen1, Vsen2, and Vsen3 through the three sensing channels CH1, CH2, and CH3 by reading in the voltages Vsen1, Vsen2, and Vsen3 stored in the three latches L1, L2, and L3.

The ADC 220 converts the voltages Vsen1, Vsen2, and Vsen3 sensed through the sensing channels CH1, CH2, and CH3 to digital sensed data, outputs the converted sensed data Dsen1, Dsen2, and Dsen3, and then stores the data Dsen1, Dsen2, and Dsen3 in memory 400.

Referring to FIG. 4, the timing controller 140 reads the sensed data Dsen1, Dsen2, and Dsen3 that have been sensed by the ADC 220 and stored in the memory 400 as described above, changes data Data to be supplied to the subpixels into data Data', and then outputs the changed data Data' to the DIC 200.

Consequently, the DIC 200 receives the changed data Data', converts the changed data Data' to analog data voltages Vdata', and then supplies the analog data voltages Vdata' to the corresponding subpixels via an output buffer (not shown).

FIG. 6 is a diagram illustrating the range of an input voltage Vsen and the range of output data Dsen of the ADC 220 in the display device 100 according to an exemplary embodiment.

Referring to FIG. 6, for example, the input voltage of the ADC 220 ranges from 0 V to 3 V, and the output data of the ADC 220 ranges from 0 to 1023 corresponding to 10 bits. That is, the ADC 220 converts the voltage Vsen within the input voltage range from 0 V to 3 V to the digital data Dsen within the output data range from 0 to 10123 that can be expressed by 10 bits.

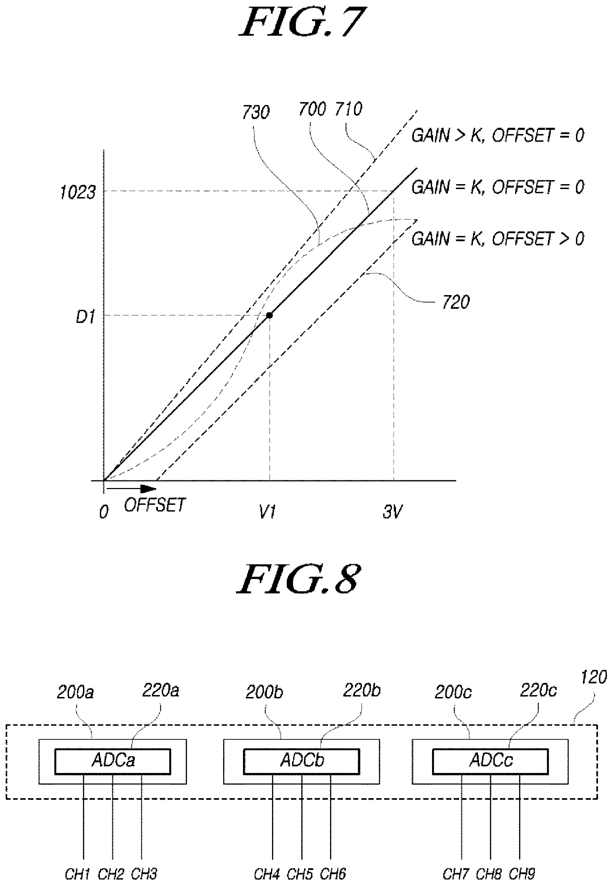

The input-output relationship of the ADC 220 can be expressed on a graph (x axis: input voltage, y axis: output voltage), as illustrated in FIG. 7.

FIG. 7 is a graph illustrating the input-output relationship and the characteristics information of the ADC 220 in the display device 100 according to an exemplary embodiment.

Referring to FIG. 7, the input-output relationship of the ADC 220 can be ideally defined along a straight line 700 that connects a point (0, 0) where an input voltage is 0 V and output data is 0 and a point (3, 1023) where an input voltage is 3 V and output data is 1023.

This ideal ADC 220 can have ideal linear ADC characteristics where a gain corresponding to the incline is k (=1023/3V) and an offset corresponding to an x-intercept is 0.

In addition, although the ADC 220 has the linear ADC characteristic, the linear ADC characteristics of the ADC 220 can differ from the ideal linear characteristics of the straight line 700. In practice, the linear ADC characteristics of the ADC 220 can be expressed by a straight line 710 where a gain corresponding to an incline is greater than k.

In practice, the linear ADC characteristics of the ADC 220 can be expressed by a straight line (not shown) where a gain corresponding to an incline is smaller than k.

In addition, in practice, the ADC 220 can have linear ADC characteristics expressed by a straight line 720 where an offset corresponding to an x-intercept is greater than 0 instead of the straight line 700 that exhibits the ideal linear characteristics.

In practice, the linear ADC characteristics of the ADC 220 can be expressed by a straight line (not shown) where an offset corresponding to an x-intercept is smaller than 0.

In practice, the ADC 220 can have non-linear ADC characteristics expressed by a curved line 730 illustrated in FIG. 7 instead of having the linear ADC characteristics corresponding to the tendencies of the input-output relationships defined by the above-mentioned straight lines 700, 710, and 720.

As described above, regarding the ADC characteristics of the ADC 220, the phenomenon where a gain differs from an ideal gain (=k), an offset differs from an ideal offset (=0), or the line is non-linear may be an actual phenomenon that occurs without any external factor or a phenomenon that is caused by an external factor.

The ADC characteristics of the ADC 220 may be changed by an external factor, for example, where the ADC 220 or the DIC 200 or display device 100 including the ADC 220 operates for an extended period of time, the temperature of the ADC 220 or the DIC 200 or display device 100 including the ADC 220 is increased, or the ADC 220 or the DIC 200 or display device 100 including the ADC 220 is subjected to a high pressure.

As described above, when there is a change in the ADC characteristics of the ADC 220, the ADC characteristics of each ADC 220 may differ according to the sensing channels or the ADC characteristics of one ADC 220 may differ from those of the other ADC 220.

That is, the change in the ADC characteristics may include at least one of the difference in the characteristics between the ADCs 220 or the difference in the characteristics between sensing channels of each ADC 220.

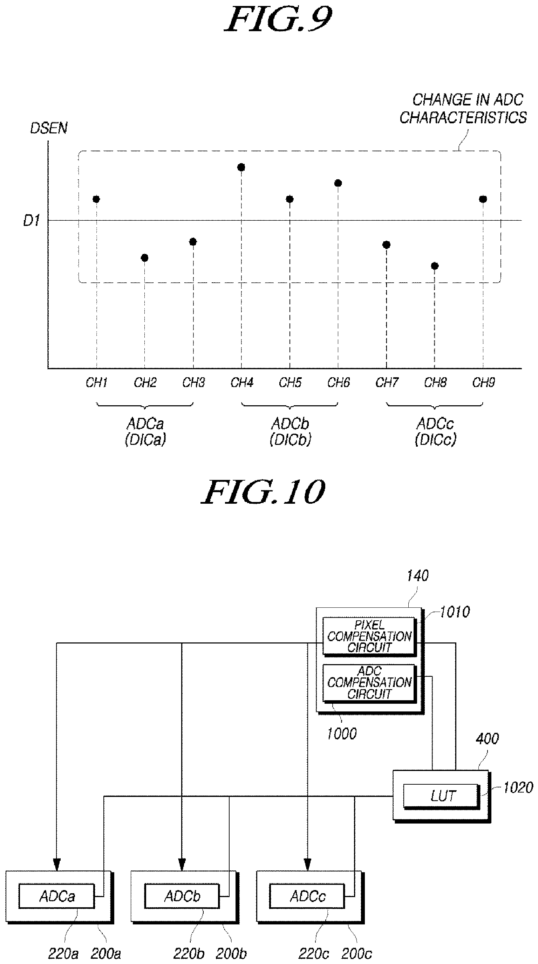

This change in the ADC characteristic will be described again with reference to FIG. 8 and FIG. 9.

FIG. 8 is a diagram illustrating the data driver 120 including three DICs 200a, 200b, and 200c in the display device 100 according to an exemplary embodiment. FIG. 9 is a diagram illustrating changes in the ADC characteristics in the display device 100 according to an exemplary embodiment.

In order to study changes in the ADC characteristics, as illustrated in FIG. 8, the data driver 120 will be described by way of example as including the three DICs 200a, 200b, and 200c.

Each of the three DICs 200a, 200b, and 200c includes one ADC 220 (ADCa, ADCb, ADCc). Specifically, the first DIC 200a (DICa) includes the ADC 220a (ADCa), the second DIC 200b (DICb) includes the ADC 220b (ADCb), and the third DIC 200c (DICc) includes the ADC 220c (ADCc).

Referring to FIG. 8, for example, the ADC 220a (ADCa) has three sensing channels CH1, CH2, and CH3 corresponding to three sensing lines, the ADC 220b (ADCb) has three sensing channels CH4, CH5, and CH6 corresponding to three sensing lines, and the ADC 220c (ADCc) has three sensing channels CH7, CH8, and CH9 corresponding to three sensing lines.

Referring to FIG. 9, the same voltage V1 is input to the three sensing channels CH1, CH2, and CH3 of the ADC 220a (ADCa), and in response to the same voltage V1, output data Dsen are extracted from the three sensing channels CH1, CH2, and CH3. Likewise, the same voltage V1 is input to the three sensing channels CH4, CH5, and CH6, and in response to the same voltage V1, output data Dsen are extracted from the three sensing channels CH4, CH5, and CH6. In the same manner, the same voltage V1 is input to the three sensing channels CH7, CH8, and CH9, and in response to the same voltage V1, output data Dsen are extracted from the three sensing channels CH7, CH8, and CH9.

When the output data Dsen extracted from the nine sensing channels CH1 to CH9 as above can be expressed as in FIG. 9, it is apparent that the output data Dsen from the nine sensing channels CH1 to CH9 are different from each other. In other words, the sensing channels of each ADC 220 output different data, and the ADCs 220 also output different data.

In FIG. 9, the straight line having output data D1 indicates output data that have ideal linear ADC characteristics when an input voltage is V1.

As described above, when there is a change in the ADC characteristic for any reason, there occurs a problem in that the voltage Vsen sensed for pixel compensation is not converted into accurate sensed data Dsen. Consequently, pixel compensation may not be properly performed, thereby failing to overcome the non-uniform luminance of the subpixels.

Therefore, this embodiment provides a function of compensating for a change in ADC characteristics (hereinafter referred to as the "ADC compensation function") by which accurate sensed data can be obtained regardless of a change in the ADC characteristics.

A more detailed description will be given below of the ADC compensation function by which accurate sensed data can be obtained regardless of a change in the ADC characteristics.

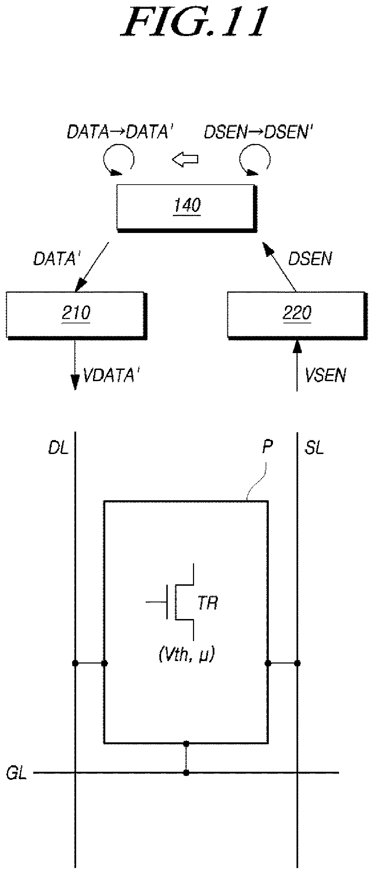

FIG. 10 is a schematic diagram illustrating a configuration for compensating for a change in the ADC characteristics in the display device 100 according to an exemplary embodiment, and FIG. 11 is a conceptual diagram illustrating pixel compensation to which ADC compensation is applied in the display device 100 according to an exemplary embodiment.

Referring to FIG. 10, the display device 100 according to an exemplary embodiment includes an ADC compensation circuit 1000 and a pixel compensation circuit 1010. The ADC compensation circuit 1000 and the pixel compensation circuit 1010 can be components of the timing controller 140. However, they might be realized as a single unit and might be located outside the timing controller in another unit or as a separate unit.

When there is a change in the ADC characteristics, the ADC compensation circuit 1000 performs ADC compensation by updating a lookup table (LUT) 1020 that includes ADC characteristics information according to the sensing channels such that the change in the ADC characteristics including at least one of the difference in the characteristics between the ADCs 220 and the difference in the characteristics between the sensing channels within each ADC 220 can be compensated.

Referring to FIG. 10 and FIG. 11, the pixel compensation circuit 1010 of the timing controller 140 performs the pixel compensation such that the characteristics (e.g. a threshold voltage Vth or mobility µ) of the transistor within each subpixel is compensated based on the changed sensed data Dsen' of the sensed data Dsen according to the lookup table 1020 updated by the ADC compensation circuit 1000.

Accordingly, based on the changed sensed data Dsen' according to the lookup table 1020 updated by the ADC compensation circuit 1000, the timing controller 140 changes data Data to be supplied to the subpixels SP to data Data', and outputs the changed data Data'. Then, the DAC 210 within the DIC 200 converts the changed data Data' to data voltages Vdata' and subsequently outputs the data voltages Vdata'. The converted data voltages Vdata' are supplied to the corresponding subpixels SP.

Referring to FIG. 10 and FIG. 11, even if the sensed data Dsen output from the ADC 220 are inaccurate due to a change in the ADC characteristics, the sensed data Dsen are compensated, and the pixel compensation is performed using the changed sensed data Dsen' that has been compensated. It is therefore possible to remove the inaccuracy from the sensed data and the pixel compensation caused by the change in the ADC characteristics.

The above-described ADC compensation circuit 1000 senses a change in the ADC characteristics (a change in the ADC characteristic information) if the sensed data Dsen obtained by the two or more ADCs 220 differ from the reference data previously stored in the memory. In this case, the ADC compensation circuit 1000 can enhance the accuracy with which the change in the ADC characteristics is sensed by further considering at least one of temperature change information and pressure change information received from the sensors (not shown).

After the change in the ADC characteristic is sensed, the ADC compensation circuit 1000 can perform ADC compensation to update the lookup table 1020 by changing at least one piece of information (e.g. an offset) from among the ADC characteristics information according to the sensing channels (e.g. offsets or gains) included in the lookup table 1020 in order to compensate for the change in the ADC characteristics.

This ADC compensation can be performed in response to a signal indicating that the display device 100 is powered-off or can be performed in real time while the display device 100 is being powered on.

Herein, the "ADC compensation" is referred to as real-time data driver IC sensing (hereinafter referred to as "RTDS").

Alternatively or additionally, the pixel compensation may be performed in real time to compensate for the mobility µ of the transistors within the subpixels.

Here, the pixel compensation intended to compensate for the mobility in real time while the display device 100 is being powered on is referred to as real-time (hereinafter referred to as "RT") compensation.

For the above-described RT compensation, the timing controller 140 can control the pixel compensation (RT compensation) to compensate for the mobility of the transistor of each subpixel in a blank time on a vertical synchronous signal Vsync.

In addition, the timing controller 140 controls ADC compensation (i.e. RTDS) in response to a signal indicating that the display device 100 is powered-off, and subsequently, controls pixel compensation to compensate for the threshold voltage of the transistor within each subpixel.

The pixel compensation of compensating for the threshold voltage of the transistor within each subpixel in response to the signal indicating that the display device 100 is powered-off is referred to as "off real-time sensing" (hereinafter referred to as "OFF RS").

Although the ADC compensation (i.e. the RTDS) can be performed in response to the signal indicating that the display device 100 is powered off as described above, the ADC compensation can be performed in real time while the display device 100 is being powered on.

As such, when the ADC compensation is performed in real time while the display device 100 is being powered on, it is required to control the timing for the RT compensation corresponding to the pixel compensation that is performed in real time while the display device 100 is being powered on and timing for the RTDS corresponding to the ADC compensation.

Therefore, the timing controller 140 controls the timing such that both the pixel compensation (RT compensation) and the ADC compensation (RTDS) are performed before a power-off signal of the display device 100 is generated, i.e. while the display device 100 is being turned on.

For example, the timing controller 140 may control the ADC compensation to be performed in at least one blank time from among several blank times on the vertical synchronous signal Vsync in a single frame before the power-off signal of the display device 100 is generated, and may control the pixel compensation to be performed in the remaining blank times.

As such, when the ADC compensation (RTDS) is already performed in real time while the display device 100 is being turned on, the timing controller 140 controls the pixel compensation to be performed such that the threshold voltage of the transistor within each subpixel (OFF RS) is compensated without performing the ADC compensation (i.e. RTDS) when the power-off signal is generated.

In addition, the above-mentioned lookup table 1020 includes offsets and gains according to the sensing channels for each of two or more ADCs 220, the offsets and gains being included in the ADC characteristics information defining the input-output relationship.

When the lookup table 1020 is updated by the ADC compensation circuit 1000, at least one (e.g. an offset) of offsets and gains of the ADC characteristic information can be changed.

The voltage Vsen sensed at the ADC 220 while sensing a threshold voltage is higher than the voltage Vsen sensed at the ADC 220 while sensing mobility. The input voltage Vsen of the ADC 220 during the threshold voltage sensing is higher than the input voltage Vsen of the ADC 220 during the mobility sensing. Therefore, the lookup table 1020 that is to be referred to for the threshold voltage sensing must differ from the lookup table 1020 that is to be referred to for the mobility sensing.

Accordingly, the lookup table 1020 stored in the memory 400 includes a first lookup table for threshold voltage sensing mode and a second lookup table for mobility sensing mode, the second lookup table being separate from the first lookup table.

As described above, the change in the ADC characteristics may be a change in the characteristics between the ADCs 220 or between the sensing channels within each ADC 220.

Herein, two compensation methods are disclosed as the ADC compensation by which a change in the ADC characteristic is compensated. One method compensates for a change in the ADC characteristic according to the DICs (hereinafter referred to as "DIC-specific ADC compensation" or "first ADC compensation"). The other method compensates for a change in the ADC characteristic according to the sensing channels (hereinafter referred to as "CH-specific compensation" or "second ADC compensation").

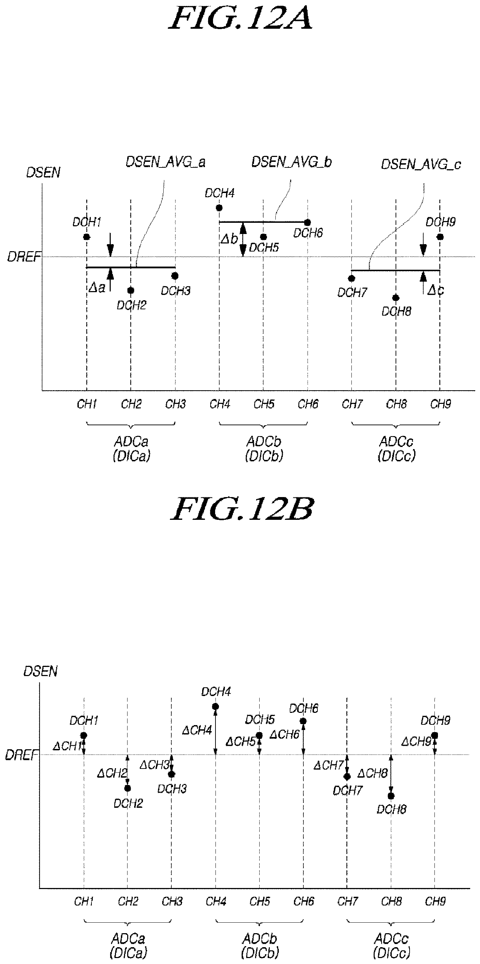

FIG. 12A and FIG. 12B are diagrams illustrating the two ADC compensation methods in the display device 100 according to an exemplary embodiment.

FIG. 12A is a diagram conceptually illustrating the first ADC compensation for a change in the ADC characteristics according to the DICs 200.

Referring to FIG. 12A, even if the sensed data differ according to the sensing channels of one DIC, the sensed data Dsen are changed by the same amount of compensation for all of the sensing channels of one DIC 200 based on the difference Δ between one average sensed data Dsen_avg obtained by averaging the sensed data according to the sensing channels and preset reference data Dref.

Referring to FIG. 12A, a description will be given of the ADC compensation in the first data DIC 200a (DICa), i.e. in the ADC 220a (ADCa). The ADC 220a (ADCa) of the first DIC 200a (DICa) receives the same voltage as an input for three sensing channels CH1, CH2, and CH3, outputs three sets of different sensed data Dch1, Dch2, and Dch3, and stores the three sets of different sensed data Dch1, Dch2, and Dch3 in the memory 400.

The ADC compensation circuit 1000 obtains average sensed data Dsen_avg_a by averaging the three sets of different sensed data Dch1, Dch2, and Dch3, and calculates the difference Δa between the average sensed data Dsen_avg_a and the reference data Dref previously stored in the memory 400.

The ADC compensation circuit 1000 updates the lookup table 1020 by adding or deducting the same amount of compensation Δa to or from the ADC characteristics information (e.g. offset) of each of the three sensing channels CH1, CH2, and CH3 of the ADC 220a (ADCa) stored in the lookup table 1020.

It is appreciated that the three sets of sensed data Dch1, Dch2, and Dch3 for the three sensing channels CH1, CH2, and CH3 of the ADC 220a (ADCa) are compensated by the same amount of compensation Δa even if the three sets of sensed data Dch1, Dch2, and Dch3 are different from each other. This, however, fails to reflect the difference in the characteristics between the sensing channels, which is problematic.

Referring to FIG. 12A, in the ADC 220b (ADCb) which is a component of the second DIC 200b (DICb), three sets of sensed data Dch4, Dch5, and Dch6 for the three sensing channels CH4, CH5, and CH6 of the ADC 220b (ADCb) are compensated by the same amount of compensation Δa even if the three sets of sensed data Dch4, Dch5, and Dch6 are different from each other, as in the ADC compensation in the ADC 220a (ADCa) of the first DIC 200a (DICa).

In addition, in the ADC 220c (ADCc) which is a component of the third DIC 200c (DICc), three sets of sensed data Dch7, Dch8, and Dch9 for the three sensing channels CH7, CH8 and CH9 are also compensated by the same amount of compensation Δa even if the three sets of sensed data Dch7, Dch8, and Dch9 are different from each other.

In FIG. 12A, it is assumed that all reference data Dref shall be the same for all of the sensing channels CH1 to CH9.

The first ADC compensation method has advantages in that the amount of data is reduced since it is required to store only one piece of reference data for each DIC and that the amount of calculation is reduced since the comparison of data for the update of the lookup table is performed according to the DICs. That is, the first ADC compensation method leads to efficient ADC compensation.

Unlike the first ADC compensation method, the second ADC compensation method performs the ADC compensation according to the sensing channels, which will be described below with reference to FIG. 12B.

Referring to FIG. 12B, the second ADC compensation method does not average the sensed data according to the sensing channels, but separately changes the sensed data Dsen according to the sensing channels by determining an amount of compensation for each of the sensing channels based on the difference Δ between predetermined reference data Dref for the sensing channels.

With reference to FIG. 12B, a description will be given of the ADC compensation in the first DIC 200a (DICa), i.e. in the ADC 220a (ADCa). The ADC 220a (ADCa) which is a component of the first DIC 200a (DICa) receives the same voltage for three sensing channels CH1, CH2, and CH3, outputs three sets of different sensed data Dch1, Dch2, and Dch3, and stores the three sets of different sensed data Dch1, Dch2, and Dch3 in the memory 400.

The ADC compensation circuit 1000 calculates differences Δch1, Δch2, and Δch3 between the three sets of different sensed data Dch1, Dch2, and Dch3 and the reference data Dref previously stored in the memory 400.

The ADC compensation circuit 1000 updates the lookup table 1020 by adding or deducting corresponding compensation amounts Δch1, Δch2, and Δch3 to or from the ADC characteristic information (e.g. offset) of the three sensing channels CH1, CH2, and CH3 of the ADC 220a (ADCa) stored in the lookup table 1020.

It is appreciated that the three sets of sensed data Dch1, Dch2, and Dch3 for the three sensing channels CH1, CH2, and CH3 are compensated by individual compensation amounts Δch1, Δch2, and Δch3.

Accordingly, unlike the first ADC compensation method, the second ADC compensation method can more accurately compensate for the sensed data by reflecting the difference in the characteristics between the sensing channels, whereby the pixel compensation can be performed more precisely.

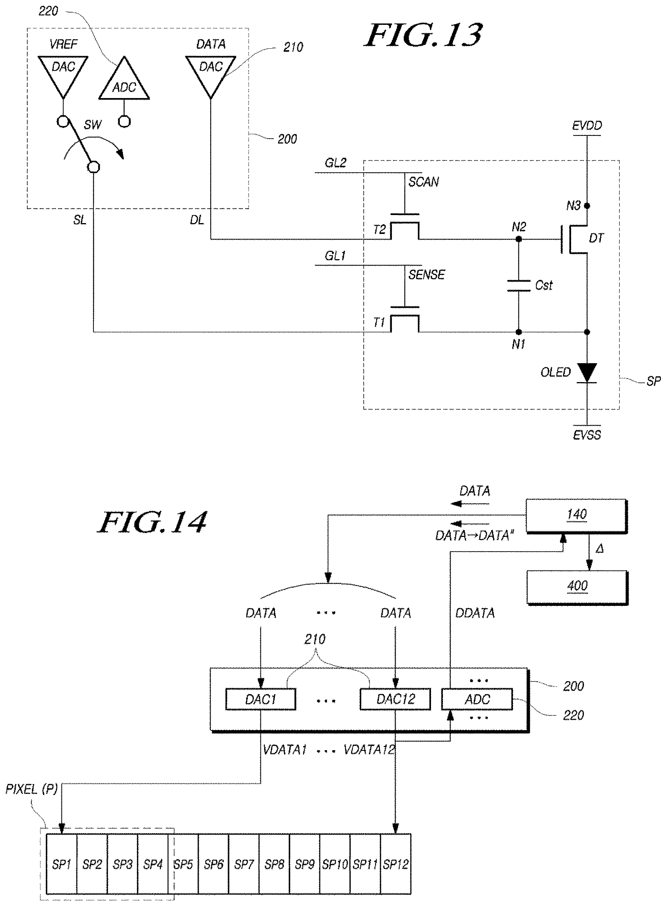

Referring to FIG. 13, when the display device 100 according to an exemplary embodiment is an OLED display device, each of the subpixels includes an OLED, a driving transistor DT, a first transistor T1, a second transistor T2 and a capacitor Cst. The driving transistor DT drives the OLED. The first transistor T1 is controlled by a first scanning signal SENSE supplied through a first gate line GL1, and is connected between a line SL serving as a reference voltage line through which a reference voltage is supplied or a sensing line and an N1 node (source or drain node) of the driving transistor DT. The second transistor T2 is controlled by a second scanning signal SCAN supplied through a second gate line GL2, and is connected between a data line DL and an N2 node (gate node) of the driving transistor DT. The capacitor Cst is connected between the N1 node and the N2 node of the driving transistor DT.

When the second transistor T2 is turned on, the second transistor T2 applies a data voltage Vdata supplied through the DIC 200 to the N2 node (gate node) of the driving transistor DT.

When the first transistor T1 is turned on, the first transistor T1 applies a reference voltage Vref supplied through the line SL to the N1 node (source or drain node) of the driving transistor DT. Here, the line SL serves as a reference voltage line.

In addition, the first transistor T1 is turned on according to the switching operation SW, and allows a voltage in the N1 node of the driving transistor DT to be applied to the line SL, such that the ADC 220 within the DIC 200 can sense the voltage in the N1 node of the driving transistor DT. Here, the line SL serves as a sensing line, and the N1 node of the driving transistor serves as a sensing node.

One line SL, as illustrated in FIG. 13, can be provided in each row of four subpixel rows (R, W, G and B).

According to the present invention as set forth above, it is possible to overcome the problem in that the luminance of each subpixel is not compensated or the difference in the levels of luminance between the subpixels is not compensated although the pixel compensation function is provided.

In addition, according to the present invention, although the result of sensing the sensing nodes within each subpixel is not accurate, the sensing result is compensated to have an accurate value. This can consequently prevent or reduce the non-uniformity of luminance, thereby improving the image quality of the display device 100.

Furthermore, according to the present invention, the ADC compensation technology capable of compensating for a change in the ADC characteristic is provided. When the characteristic of the ADC 220 corresponding to the sensing unit has changed, accurate pixel compensation can be performed using the ADC sensing result.

In addition, according to the present invention, the ADC compensation function efficiently compensates for a change in the ADC characteristic according to the DICs when the ADC characteristic has changed.

Furthermore, according to the present invention, the ADC compensation function accurately compensates for a change in the ADC characteristic according to the sensing channels when the ADC characteristic has changed.

Hereinabove, the necessity of the sensing unit compensation function as well as the configuration and operation thereof have been described in detail with reference to the drawings. Even in the case in which any initial deviation of the ADC is compensated, a change in the ADC characteristics caused by external factors cannot be compensated. Therefore, a difference in outputs from the DICs may lead to a source block dim. The source block dim may also occur when an offset or a gain intended to compensate for the initial deviation of the ADC is incorrectly extracted.

A detailed description will be given below of the "DIC output compensation function" to compensate for an output error of the data driver. Thereafter, a detailed description will be given of the "deviation compensation function for each DIC" to compensate for an output deviation by monitoring the output of each DIC when the data driver includes two or more DICs.

FIG. 14 illustrates the DIC output compensation of the display device 100 according to an exemplary embodiment.

As illustrated in FIG. 14, the DIC 200 includes DACs 210 corresponding to data lines and one ADC 220. The DIC 200 supplies an analog data voltage Vdata to twelve subpixels SP of three pixels P, each of the pixels include four subpixels, through twelve data lines. The number of the DACs 210 is the same as the number of the data lines, and the DACs 210 convert digital data Data to the analog data voltage Vdata.

When the characteristics of the DIC 200 are changed by external factors, the DIC may not complete the process of converting the data Data to the accurate data voltage Vdata and supply the data voltage Vdata to each of the subpixels through an output buffer.

As illustrated in FIG. 14, an output terminal (an output terminal of an output buffer when the output buffer is provided) of one DAC DAC12 of the DACs 210 (DAC1 to DAC12) is connected to an input terminal of the ADC 220. Since the output terminal of one DAC DAC12 of the DACs 210 (DAC1 to DAC12) is connected to the input terminal of the ADC 220, the ADC 220 can convert an analog data voltage Vdata12 to be supplied to one subpixel (e.g. SP12) to digital sensing data Ddata.

Data used when the DIC output compensation function is performed may be data having a monochrome pattern (e.g. a gray pattern). Since the output errors of the DICs are recognized by people at a low tone, the DIC output compensation function based on the low tone may be performed using the monochrome pattern of the low tone as data. For example, when digital data used for performing the DIC output compensation function is a value corresponding to 3 V, the sensing data supplied to the subpixel may be a value corresponding to 2.8 V.

When the characteristics of the DIC 200 are changed and the data corresponding to 3 V is supplied as a data voltage of 2.8 V to a specific subpixel SP9 in the foregoing example, the ADC 220 converts the data voltage of 2.8 V to the digital sensing data Ddata, and supplies the digital sensing data Ddata to the timing controller 140. The timing controller 140 stores a difference between original data and the sensing data (a value corresponding to 0.2 V) as an output error Δ of the DIC 200 in the memory 400.

When data are provided to the DIC 200 during actual driving, the timing controller 140 supplies compensation data Data", in which the output error of the DIC 200 is compensated, to the DIC 200 by reflecting the output error Δ (the value corresponding to 0.2 V in the foregoing example) stored in the memory 400.

The DIC 200 receives the compensation data Data" from the timing controller 140, and supplies an analog data voltage Vdata" to the subpixels SP1 to SP12. In the foregoing example, the DIC 200 supplies the compensation data Data" (= original data + Δ) to each subpixel.

The foregoing example has been described that the analog data voltage Vdata12 supplied to one subpixel SP12 is sensed and stored as an output error in the memory 400 and the compensated data Data" obtained by adding the output error Δ to the data is supplied to each subpixel during driving. However, it is possible to sense data voltages supplied to two or more subpixels, store an average of the sensed data voltages as an output error of the DIC 200 in the memory 400, and perform the output error compensation function of the DIC during driving.

Although the ADC 220 performing the pixel compensation function has been illustrated as the sensing unit that senses a data voltage in the foregoing example, the sensing unit that senses the data voltage may be separately provided in the display device 100.

Although the data driver 120 has been illustrated as having a single DIC 200 in the foregoing example, the data driver 120 may include two or more DICs, for example, three DICs 200a, 200b, and 200c as illustrated in FIG. 8.

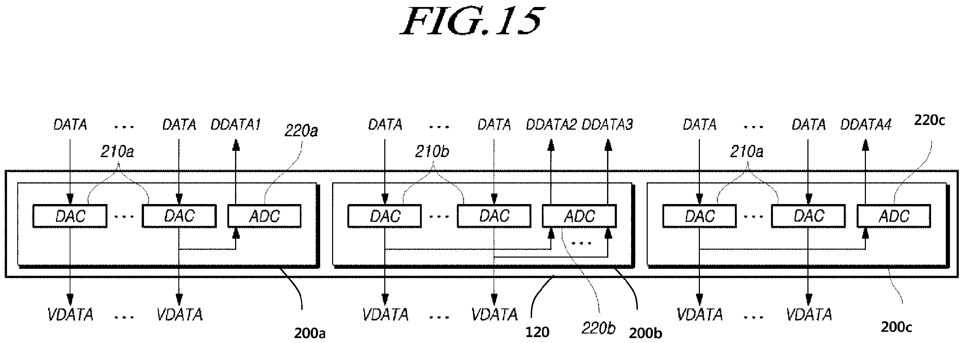

FIG. 15 is a detailed configuration diagram illustrating the data driver 120 including the three DICs 200a, 200b, and 200c illustrated in FIG. 8.

Referring to FIG. 8 and FIG. 15, the data driver 120 is illustrated as including the three DICs 200a, 200b, and 200c.

For example, each of the three DICs 200a, 200b, and 200c includes two or more DACs 210 corresponding to data lines and at least one ADC 220.

The first DIC 200a includes the DACs 210a corresponding to the data lines and one ADC 220a. The second DIC 200b includes DACs 210b corresponding to the data lines and one ADC 220b. The third DIC 200c includes DACs 210c corresponding to the data lines and one ADC 220c. The configuration and operation of each of the three DICs 200a, 200b, and 200c may be identical to those of the DIC 200 illustrated above with reference to FIG. 14.

As described above, external factors may change the characteristics of each DIC and cause differences in the outputs of the DICs 200a, 200b, and 200c.

The output terminal of each of the DACs adjacent to a corresponding DIC of the two adjacent DICs is connected to the input terminal of the ADC in the corresponding DIC

For example, the output terminal of the last DAC 210a of the first DIC 200a of the adjacent DICs is connected to the input terminal of the ADC 220a, and the output terminal of the first DAC 210b of the second DIC 200b of the adjacent DICs is connected to the input terminal of the ADC 220b. The ADC 220a of the first DIC 200a can convert an analog data voltage Vdata supplied to one subpixel to digital sensed data Ddata1. The ADC 220b of the second DIC 200b can convert an analog data voltage Vdata supplied to one subpixel to digital sensed data Ddata2 and the other analog data voltage Vdata supplied to another subpixel to digital sensed data Ddata3.

The output terminal of the last DAC 210b of the second DIC 200b of the adjacent DICs is connected to the input terminal of the ADC 220b, and the output terminal of the first DAC 210c of the third DIC 200c is connected to the input terminal of the ADC 220c. The third DIC 200c can convert the analog data voltage Vdata supplied to one subpixel to digital sensed data Ddata4.

Specifically, the data driver 120 includes two or more DACs electrically connected to data lines to supply a data voltage to the data lines and an ADC transmitting sensed data obtained by sensing the data voltage supplied to one data line connected to one DAC. Here, two or more DICs each including two or more DACs and one ADC are provided, and the output terminal of one DAC of the DACs of each DIC can be connected to the input terminal of the ADC. In addition, the DAC of each DIC, with the output terminal being connected to the input terminal of the ADC, can be adjacent to another DIC. When other DICs are adjacent to both ends of one DIC, the output terminals of the two DACs adjacent to the other DICs can be connected to the input terminal of the ADC.

Data used in performing the compensating function for the differences between the DICs may have a monochrome pattern (e.g. a gray pattern). Since the differences in the outputs between the DICs at a low tone are recognized by people, it is possible to perform the compensating function for the differences in the outputs between the DICs based on the low tone using the low-tone monochrome pattern as data.

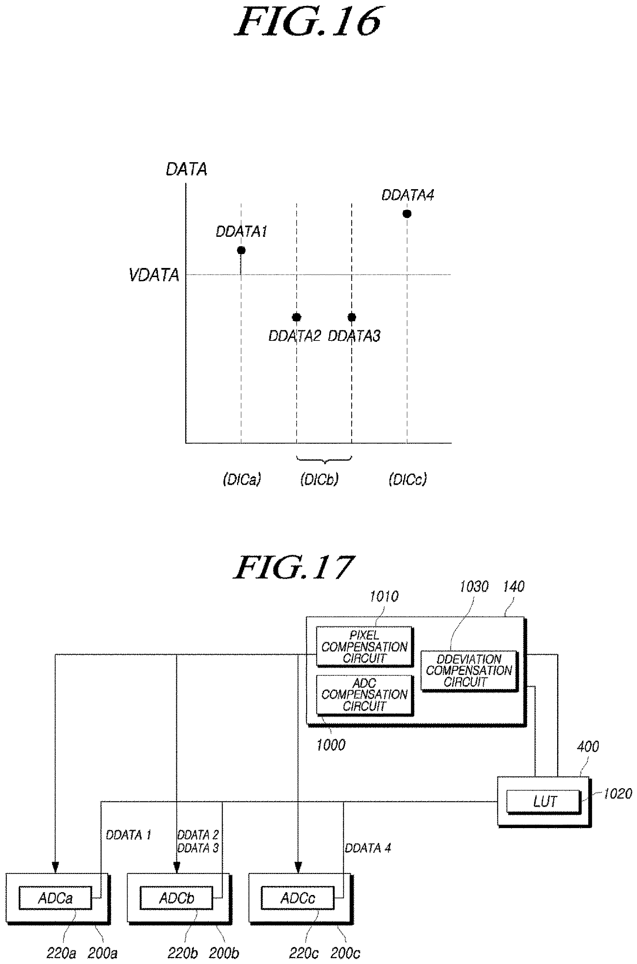

FIG. 16 illustrates the differences between the DICs in the display device 100 according to an exemplary embodiment.

AS illustrated in FIG. 16, when each of the individual DICs 200a, 200b, and 200c applies an input data Data corresponding to 3 V (Data=3 V) to the corresponding subpixel, the ADCs 220a, 220b, 220c, and 220d can sense data, i.e. Ddatal=3.2 V, Ddata2=2.8 V, Ddata3=2.8 V, and Ddata=3.4 V, due to differences between the DICs 200a, 200b, and 200c caused by external factors.

As illustrated in FIG. 15 and 16, the individual ADCs 220a, 220b and 220c supply the sensed data, i.e. Ddatal=3.2 V, Ddata2=2.8 V, Ddata3=2.8 V, and Ddata4=3.6 V, to the timing controller 140. For example, as described above with reference to FIG. 14, the difference between the original data and the sensed data can be stored as an output error Δ of each of the DICs 200a, 200b, and 200c in the memory 400. In this case, it is possible to simultaneously compensate for the output error of the DICs, but also the differences in the outputs among the DICs.

**Table 1**

| | First DIC | Second DIC | Third DIC |
|---|---|---|---|
| Output error Δ | Value corresponding to +0.2 V | Value corresponding to -0.2 V | Value corresponding to +0.6 V |

For another example, the timing controller 140 can store the differences between the sensed data and the average of the sensed data as the output errors Δ of the DICs 200a, 200b, and 200c in the memory 400 regardless of the original input data. In other words, since the average of the sensed data is 3.2 V in the foregoing example, the timing controller 140 can store the differences between the sensed data and the average of the sensed data as the output errors Δ of the DICs 200a, 200b, and 200c in the memory 400, as presented in Table 2 below. Since the output errors Δ of the individual DICs 200a, 200b, and 200c are calculated using only the sensed data and are stored in the memory 400, it is not required to separately store the input data used in sensing in the memory 400. It is therefore possible to minimize the use of the memory and reduce the period of time required for compensating the differences between the DICs.

**Table 2**

| | First DIC | Second DIC | Third DIC |
|---|---|---|---|
| Output error Δ | Value corresponding to 0 V | Value corresponding to -0.4 V | Value corresponding to +0.4 V |

Although the foregoing example has been described that each of the DICs 200a, 200b, and 200c apply the same input data to the corresponding sub-pixels and the ADCs 220a, 220b and 220crespectively sense the data, the DICs 200a, 200b, and 200c may apply different input data or the DACs of each of the DICs 200a, 200b, and 200c may apply different data. For example, during actual driving, the ADCs 220a, 220b, and 220c sense data in a specific frame, and actual input data are compared with the sensed data, whereby the output errors of the DICs are calculated.

When the timing controller 140 supplies input data to the DICs 200a, 200b, and 200c during actual driving, the timing controller 140 supplies compensation data Data" to the DICs 200a, 200b, and 200c by compensating for the output errors of the DICs 200a, 200b, and 200c by reflecting the output error Δ (a value corresponding to 0.2 V in the foregoing example) stored in the memory 400 as presented in Table 1 or Table 2.

Each of the DICs 200a, 200b, and 200c receives the compensation data Data" from the timing controller 140, and supplies an analog data voltage (Vdata"=original input data+Δ) to the subpixels.

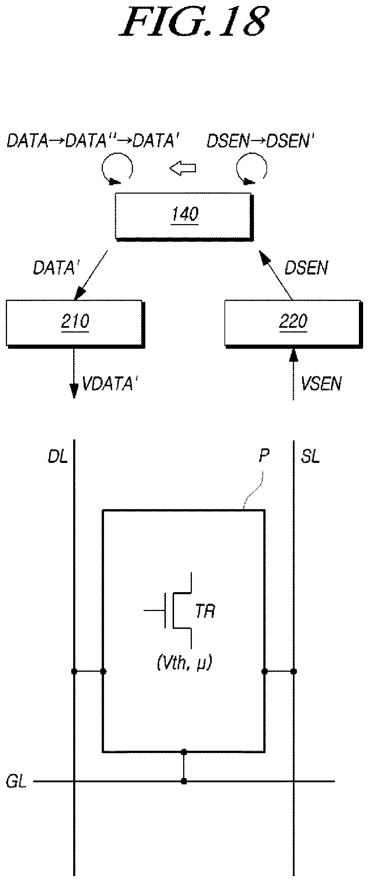

FIG. 17 is a schematic configuration diagram illustrating compensation for the differences between the DICs in the display device 100 according to an exemplary embodiment of the invention after the changes in the ADC characteristics are compensated. FIG. 18 is a conceptual view illustrating pixel compensation in the display device 100 according to an exemplary embodiment of the invention to which compensation for the differences between the DICs is applied after the ADC compensation.

Referring to FIG. 17, the display device 100 according to an exemplary embodiment includes a deviation compensation circuit 1030 in addition to the ADC compensation circuit 1000 and the pixel compensation circuit 1010 illustrated in FIG. 10. The deviation compensation circuit 1030 is included together with the ADC compensation circuit 1000 and the pixel compensation circuit 1010 in the timing controller 140.

The lookup table 1020 stored in the memory 400 includes a first lookup table for threshold voltage sensing mode, a second lookup table for mobility sensing mode, and a third lookup table including ADC characteristics information according to sensing channels, the first to third lookup tables being separate from each other. The lookup table 1020 further includes a fourth lookup table including the output errors of the DICs.

The ADC compensation operation performed by the ADC compensation circuit 1000 and the pixel compensation operation performed by the pixel compensation circuit 1010 may be identical to those described above with reference to FIG. 10 and FIG. 11.

The deviation compensation circuit 1030 compensates for the output deviation between the DICs independently of or in cooperation with the ADC compensation of the ADC compensation circuit 1000 and the pixel compensation of the pixel compensation circuit 1010.

The ADC compensation circuit 1000 updates the lookup table 1020 including the ADC characteristics information according to the sensing channels, as described above with reference to FIG. 10 and FIG. 11.

The pixel compensation circuit 1010 of the timing controller 140 performs pixel compensation to compensate for the characteristics (e.g. a threshold voltage Vth or mobility µ) of the transistor in each subpixel based on the changed sensed data Dsen' of the sensed data Dsen according to the lookup table updated by the ADC compensation circuit 1000.

The deviation compensation circuit 1030 stores the output errors of the DICs in the lookup table 1020, as described above with reference to FIG. 15.

Consequently, the timing controller 140 changes the data Data to be supplied to the sub-pixels SP to the changed data Data' based on the changed sensed data Dsen' according to the lookup table 1020 updated by the ADC compensation circuit 1000, and outputs the compensation data Data" obtained by compensating for the changed data Data' based on the output error of each of the DICs according to the lookup table 1020 stored by the deviation compensation circuit 1030. Accordingly, each of the DACs 210a, 210b, and 210c in the DICs 200a, 200b, and 200c converts the compensation data Data" to the data voltage Vdata", and supplies the data voltage Vdata" to the corresponding subpixels SP.

The DIC output error compensation and the compensation for the output deviation between the DICs may be performed when a power off signal has occurred, or may be performed in real time while the power is on.

The DIC output error compensation or the compensation for the output deviation between the DICs may be performed while initial pixel compensation and/or ADC compensation are being performed. In addition, the DIC output error compensation or the compensation for the output deviation between the DICs may be formed while the display device being powered on. Furthermore, the DIC output error compensation or the compensation for the output deviation between the DICs may be performed while a gray pattern is being output during normal driving.

The DIC output error compensation or the compensation for the output deviation between the DICs may be performed after the ADC compensation.

When the DIC output error compensation or the compensation for the output deviation between the DICs is performed in real time after the ADC compensation (i.e. RTDS) while the power is on, the timing for the RT compensation corresponding to the pixel compensation, the RTDS corresponding to the ADC compensation, the DIC output error compensation, and the compensation for output deviation between the DICs that are performed in real time while the display device 100 is being powered on must be controlled. Therefore, the timing controller 140 can control the timing such that all of the pixel compensation (RT), the ADC compensation (RTDS), the DIC output error compensation, and the compensation for the output deviation between the DICs must be performed before the power off signal of the display device 100 is generated, i.e. when the display device 100 is being turned on.

The DIC output error compensation or the compensation for the output deviation between the DICs may be performed before normal driving after the ADC compensation while the display device 100 is being powered on.

In addition, according to the invention, the output error of the data driver can be compensated. When the data driver includes two or more DICs, it is possible to compensate for the output deviation by monitoring the outputs of the DICs.

Furthermore, according to the invention, since the output error of the data driver and the output deviation of the DICs are compensated, luminous non-uniformity is prevented or reduced, thereby allowing the display device to have superior image quality.

Although the display device 100 according to an exemplary embodiment of the present invention has been described as being an OLED display device, the display device 100 may be implemented as any display device, such as a liquid crystal display (LCD) or a plasma display panel (PDP).

The foregoing descriptions and the accompanying drawings have been presented in order to explain the certain principles of the present invention. The foregoing embodiments disclosed herein shall be interpreted as illustrative only but not as limitative of the principle and scope of the invention. It should be understood that the scope of the invention shall be defined by the appended Claims and all of their equivalents fall within the scope of the invention.

## Claims

1. A display device comprising:
a display panel (110) on which subpixels (SP) are disposed;
sensing lines (SL) for one or more subpixels, each sensing line being connected to one or more subpixels;
a data driver (120) adapted to supply a data voltage (Vdata) corresponding to a test pattern data to at least one data line (DL1-DLm), the data driver (120) includes at least two data driving ICs (200a, 200b, 200c) adapted to supply a data voltage (Vdata) corresponding to the test pattern data to at least one data line (DL1-DLm) connected to the at least two data driving ICs (200a, 200b, 200c),each data driving IC includes at least one analog-to-digital converter (220) adapted to sense at least one data voltage (Vdata) of each of the at least two data driving ICs (200a, 200b, 200c) supplied to at least one data line (DL1-DLm), and converting the sensed data voltages (Vsen1, Vsen2) measured through one or more sensing channels (CH1-CH9) corresponding to the sensing lines (SL) to digital sensed data (Dsen1, Dsen2); and
a memory (400) for storing a lookup table (1020) that includes analog-to-digital characteristics information according to the sensing channels; and
a controller (140) adapted to:
acquire average sensed data (DSEN_AVG) according to the data driver ICs (200a, 200b, 200c) by averaging a plurality of sensed data obtained from the one or more analog-to-digital converters (220);
supply compensation data (Data") generated based on the digital sensed data (Dsen1, Dsen2) changed according to the lookup table, to the data driver (120) connected to at least one data line of the data lines (DL1-DLm),
the controller (140) includes a data driver deviation compensation unit (1000, 1030) to perform an analog-to-digital converter compensation by updating the lookup table (1020) based on differences (Δa, Δb, Δc) between the average sensed data (DSEN _AVG) according to the data driver ICs (200a, 200b, 200c) for a same voltage and previously stored reference data (DREF) of each of data driver ICs (200a, 200b, 200c).

2. The display device as claimed in claim 1, wherein the same test pattern data is supplied to data lines (DL1-DLm) connected to the at least two data driving ICs (200a, 200b, 200c).

3. The display device as claimed in claim 1 or 2, wherein the test pattern data is supplied to one data line of the first data driving ICs (200a) and to one data line of the second data driving ICs (200b), wherein the two data lines are adjacent to each other and the first and second data driving ICs (200a, 200b, 200c) are adjacent to each other, wherein the least one analog-to-digital converter (220) is adapted to sense the data voltages (Vdata) supplied to the adjacent data lines (DL1-DLm) of the two adjacent data driving ICs (200a, 200b, 200c).

4. The display device as claimed in any one of the preceding claims 1-3, wherein the analog-to-digital converter (220) is included in one of the at least two data driving ICs (200a, 200b, 200c) or in the controller (140) or each data driver IC includes one analog-to-digital converter (220).

5. The display device according to any one of the preceding claims 1-4, wherein at least one output terminal of each of the two or more data driver ICs (200a, 200b, 200c) is connected to the analog-to-digital converter of the data driver ICs (200a, 200b, 200c).

6. The display device according to claim 5 wherein the analog-to-digital converter (220) is adapted to sense the data voltage supplied to at least one data line of the data lines connected to one digital-to-analog converter (210) of the two or more digital-to-analog converters included in the data driver IC and/or is adapted to convert the sensed voltages into sensed data (Dsen).

7. The display device according to any one of the preceding claims 1-6, wherein at least one outermost output of each of the data driver ICs (200a, 200b, 200c) is connected to the one analog-to-digital converter (220a, 220b, 220c) or the two outermost outputs of a data driver ICs (200a, 200b, 200c) are connected to the analog-to-digital converter (220a, 220b, 220c) included in the data driver IC (200a, 200b, 200c), respectively.

8. The display device as claimed in any one of the preceding claims 1-7, further comprising a memory (400), wherein the controller (140) is adapted to store a difference value indicating at least one of the sensed data, and a difference between a reference value based on the test pattern data and the sensed data in the memory (400), wherein the compensation data (Data') is calculated based on the difference value.

9. The display device according to claim 8, wherein the controller (140) is adapted to store output errors according to the data driver ICs (200a, 200b, 200c) in the memory (400), the output errors being differences between the reference data (Dref) based on the test pattern data and the sensed data (DDATA), and to supply compensation data (Data") produced by compensating for the sensed data (DDATA) with the output errors stored according to the data driver ICs (200a, 200b, 200c) to each of the data driver ICs (200a, 200b, 200c).

10. The display device according to claim 8, wherein the controller (140) is adapted to store output errors for the data driver ICs (200a, 200b, 200c) in the memory (400), the output errors being differences between the sensed data (DDATA) of the data driver ICs (200a, 200b, 200c) and an average of the sensed data, and to supply compensation data produced by compensating for the sensed data with the output errors stored according to the data driver ICs (200a, 200b, 200c) to the data driver integrated circuits (200a, 200b, 200c).

11. The display device according to claim 1, wherein the controller (140) is adapted to subsequently compensate for a threshold voltage of a transistor within each of the subpixels by referring to the updated lookup table (10202) after the analog-to-digital converter compensation and/or the controller (140) is adapted to compensate for a deviation in the data driver (120) after the analog-to-digital converter compensation and/or during normal driving.

12. The display device according to any one of the preceding claims, wherein the test data pattern corresponds to a monochrome pattern.

13. Method for driving a display device of one of the preceding claims comprising the steps of:
- supplying a data voltage (Vdata) corresponding to test pattern data to data lines (DL1-DLm) connected to the at least two data driving ICs (200a, 200b, 200c);
- sensing at least one data voltage (Vdata) of each of the at least two data driving ICs (200a, 200b, 200c) supplied to at least one data line of the data lines (DL1-DLm), and
- converting the sensed data voltage (Vsen1, Vsen2) measured through one or more sensing channels (CH1-CH9) corresponding to the sensing lines (SL) to digital sensed data (Dsen1, Dsen2);
- acquiring average sensed data (DSEN _AVG) according to the data driver ICs (200a, 200b, 200c) by averaging a plurality of sensed data obtained from the one or more analog-to-digital converters (220) each of which is included in a corresponding data driver IC (200a, 200b, 200c); and
- supplying compensation data (Data") generated based on the digital sensed data (Dsen1, Dsen2) changed according to the lookup table, to the data driver (120) connected to at least one data line of the data lines (DL1-DLm); and
- performing an analog-to-digital converter compensation by updating a lookup table (1020) based on differences (Δa, Δb, Δc) between the average sensed data (DSEN_AVG) according to the data driver ICs (200a, 200b, 200c) for a same voltage and previously stored reference data (DREF) of each of the data driver ICs (200a, 200b, 200c).

## Patentansprüche

1. Anzeigevorrichtung, die Folgendes umfasst:
eine Anzeigetafel (110), auf der Unterpixel (SP) angeordnet sind;
Erfassungsleitungen (SL) für ein oder mehrere Unterpixel, wobei jede Erfassungsleitung mit einem oder mehreren Unterpixeln verbunden ist;
eine Datenansteuerung (120), die ausgelegt ist, eine Datenspannung (Vdata), die Testmusterdaten entspricht, an mindestens eine Datenleitung (DL1-DLm) zu liefern, wobei die Datenansteuerung (120) mindestens zwei Datenansteuerungs-ICs (200a, 200b, 200c) umfasst, die ausgelegt sind, eine Datenspannung (Vdata), die den Testmusterdaten entspricht, an mindestens eine Datenleitung (DL1-DLm), die mit den mindestens zwei Datenansteuerungs-ICs (200a, 200b, 200c) verbunden ist, zu liefern, wobei jede Datenansteuerungs-IC mindestens einen Analog/Digital-Umsetzer (220) enthält, der ausgelegt ist, mindestens eine Datenspannung (Vdata) jeder der mindestens zwei Datenansteuerungs-ICs (200a, 200b, 200c), die an mindestens eine Datenleitung (DL1-DLm) geliefert wird, zu erfassen, und die erfassten Datenspannungen (Vsen1, Vsen2), die durch einen oder mehreren Erfassungskanäle (CH1-CH9), die den Erfassungsleitungen (SL) entsprechen, gemessen werden, in digitale erfasste Daten (Dsen1, Dsen2) umsetzt; und
einen Speicher (400) zum Speichern einer Nachschlagetabelle (1020), die Analog/Digital-Eigenschaftsinformationen gemäß den Erfassungskanälen enthält; und
eine Steuereinheit (140), die ausgelegt ist zum:
Erfassen von mittleren erfassten Daten (DSEN_AVG) gemäß den Datenansteuerungs-ICs (200a, 200b, 200c) durch Mitteln mehrerer erfasster Daten, die von dem einen oder den mehreren Analog/Digital-Umsetzern (220) erhalten werden;
Liefern von Kompensationsdaten (Data"), die anhand der digitalen erfassten Daten (Dsen1, Dsen2) erzeugt werden und gemäß der Nachschlagetabelle geändert werden, an die Datenansteuerung (120), die mit mindestens einer Datenleitung der Datenleitungen (DL1-DLm) verbunden ist,
wobei die Steuereinheit (140) eine Datenansteuerungsabweichungskompensationseinheit (1000, 1030) enthält, um eine Analog/Digital-Umsetzerkompensation durch Aktualisieren der Nachschlagetabelle (1020) anhand von Unterschieden (Δa, Δb, Δc) zwischen den mittleren erfassten Daten (DSEN_AVG) gemäß den Datenansteuerungs-ICs (200a, 200b, 200c) für dieselbe Spannung und vorher gespeicherten Referenzdaten (DREF) jeder der Datenansteuerungs-ICs (200a, 200b, 200c) auszuführen.

2. Anzeigevorrichtung nach Anspruch 1, wobei dieselben Testmusterdaten an Datenleitungen (DL1-DLm) geliefert werden, die mit den mindestens zwei Datenansteuerungs-ICs (200a, 200b, 200c) verbunden sind.

3. Anzeigevorrichtung nach Anspruch 1 oder 2, wobei die Testmusterdaten an eine Datenleitung der ersten Datenansteuerungs-IC(200a) und an eine Datenleitung der zweiten Datenansteuerungs-IC (200b) geliefert werden, wobei die beiden Datenleitungen zueinander benachbart sind und die ersten und zweiten Datenansteuerungs-ICs (200a, 200b, 200c) zueinander benachbart sind, wobei der mindestens eine Analog/Digital-Umsetzer (220) ausgelegt ist, die Datenspannungen (Vdata), die an die benachbarten Datenleitungen (DL1-DLm) der beiden benachbarten Datenansteuerungs-ICs (200a, 200b, 200c) geliefert werden, zu erfassen.

4. Anzeigevorrichtung nach einem der vorhergehenden Ansprüche 1-3, wobei der Analog/Digital-Umsetzer (220) in einer der mindestens zwei Datenansteuerungs-ICs (200a, 200b, 200c) oder in der Steuereinheit (140) enthalten ist oder jede Datenansteuerungs-IC einen Analog/Digital-Umsetzer (220) enthält.

5. Anzeigevorrichtung nach einem der vorhergehenden Ansprüche 1-4, wobei mindestens ein Ausgangsanschluss jeder der beiden oder mehreren Datenansteuerungs-ICs (200a, 200b, 200c) mit dem Analog/Digital-Umsetzer der Datenansteuerungs-ICs (200a, 200b, 200c) verbunden ist.

6. Anzeigevorrichtung nach Anspruch 5, wobei der Analog/Digital-Umsetzer (220) ausgelegt ist, die an mindestens eine Datenleitung der mit einem Digital/Analog-Umsetzer (210) der beiden oder der mehreren Digital/Analog-Umsetzer, die in der Datenansteuerungs-IC enthalten sind, verbundenen Datenleitungen gelieferte Datenspannung zu erfassen, und/oder ausgelegt ist, die erfassten Spannungen in erfasste Daten (Dsen) umzusetzen.

7. Anzeigevorrichtung nach einem der vorhergehenden Ansprüche 1-6, wobei mindestens ein äußerster Ausgang jeder der Datenansteuerungs-ICs (200a, 200b, 200c) mit dem einen Analog/Digital-Umsetzer (220a, 220b, 220c) verbunden ist oder die beiden äußersten Ausgänge einer Datenansteuerungs-IC (200a, 200b, 200c) jeweils mit dem Analog/Digital-Umsetzer (220a, 220b, 220c), der in der Datenansteuerungs-IC (200a, 200b, 200c) enthalten ist, verbunden sind.

8. Anzeigevorrichtung nach einem der vorhergehenden Ansprüche 1-7, die ferner einen Speicher (400) umfasst, wobei die Steuereinheit (140) ausgelegt ist, einen Unterschiedswert, der mindestens eine der erfassten Daten angibt, und einen Unterschied zwischen einem Referenzwert anhand der Testmusterdaten und den erfassten Daten in dem Speicher (400) zu speichern, wobei die Kompensationsdaten (Data') anhand des Unterschiedswerts berechnet werden.

9. Anzeigevorrichtung nach Anspruch 8, wobei die Steuereinheit (140) ausgelegt ist, Ausgangsfehler gemäß den Datenansteuerungs-ICs (200a, 200b, 200c) in dem Speicher (400) zu speichern, wobei die Ausgangsfehler Unterschiede zwischen den Referenzdaten (Dref) anhand der Testmusterdaten und der erfassten Daten (DDATA) sind, und Kompensationsdaten (Data"), die durch Kompensieren der erfassten Daten (DDATA) mit den gemäß den Datenansteuerungs-ICs (200a, 200b, 200c) gespeicherten Ausgangsfehlern erzeugt werden, an jede der Datenansteuerungs-ICs (200a, 200b, 200c) zu liefern.

10. Anzeigevorrichtung nach Anspruch 8, wobei die Steuereinheit (140) ausgelegt ist, Ausgangsfehler für die Datenansteuerungs-ICs (200a, 200b, 200c) in dem Speicher (400) zu speichern, wobei die Ausgangsfehler Unterschiede zwischen den erfassten Daten (DDATA) der Datenansteuerungs-ICs (200a, 200b, 200c) und einem Mittelwert der erfassten Daten sind, und Kompensationsdaten, die durch Kompensieren der erfassten Daten mit den gemäß den Datenansteuerungs-ICs (200a, 200b, 200c) gespeicherten Ausgangsfehlern erzeugt werden, an die integrierten Schaltungen der Datenansteuerung (200a, 200b, 200c) zu liefern.

11. Anzeigevorrichtung nach Anspruch 1, wobei die Steuereinheit (140) ausgelegt ist, anschließend eine Schwellenspannung eines Transistors innerhalb jedes der Unterpixel durch Bezugnahme auf die aktualisierte Nachschlagetabelle (10202) nach der Analog/Digital-Umsetzerkompensation zu kompensieren, und/oder die Steuereinheit (140) ausgelegt ist, eine Abweichung der Datenansteuerung (120) nach der Analog/Digital-Umsetzerkompensation und/oder während der normalen Ansteuerung zu kompensieren.

12. Anzeigevorrichtung nach einem der vorhergehenden Ansprüche, wobei das Testdatenmuster einem monochromen Muster entspricht.

13. Verfahren zum Ansteuern einer Anzeigevorrichtung nach einem der vorhergehenden Ansprüche, das die folgenden Schritte umfasst:
- Liefern einer Datenspannung (Vdata), die Testmusterdaten entspricht, an Datenleitungen (DL1-DLm), die mit den mindestens zwei Datenansteuerungs-ICs (200a, 200b, 200c) verbunden sind;
- Erfassen mindestens einer Datenspannung (Vdata) jeder der mindestens zwei Datenansteuerungs-ICs (200a, 200b, 200c), die an mindestens eine Datenleitung der Datenleitungen (DL1-DLm) geliefert wird, und
- Umsetzen der erfassten Datenspannung (Vsen1, Vsen2), die durch einen oder mehrere Erfassungskanäle (CH1-CH9), die den Erfassungsleitungen (SL) entsprechen, gemessen werden, in digitale erfasste Daten (Dsen1, Dsen2);
- Erfassen von mittleren erfassten Daten (DSEN_AVG) gemäß den Datenansteuerungs-ICs (200a, 200b, 200c) durch Mitteln mehrerer erfasster Daten, die von dem einen oder den mehreren Analog/Digital-Umsetzern (220) erhalten werden, von denen jeder in einer entsprechenden Datenansteuerungs-IC (200a, 200b, 200c) enthalten ist; und
- Liefern von Kompensationsdaten (Data"), die anhand der digitalen erfassten Daten (Dsen1, Dsen2) erzeugt werden und gemäß der Nachschlagetabelle geändert werden, an die Datenansteuerung (120), die mit mindestens einer Datenleitung der Datenleitungen (DL1-DLm) verbunden ist; und
- Ausführen einer Analog/Digital-Umsetzerkompensation durch Aktualisieren einer Nachschlagetabelle (1020) anhand von Unterschieden (Δa, Δb, Δc) zwischen den mittleren erfassten Daten (DSEN_AVG) gemäß den Datenansteuerungs-ICs (200a, 200b, 200b) für dieselbe Spannung und vorher gespeicherten Referenzdaten (DREF) jeder der Datenansteuerungs-ICs (200a, 200b, 200c).

## Revendications

1. Dispositif d'affichage comprenant :
un panneau d'affichage (110) sur lequel des sous-pixels (SP) sont disposés ;
des lignes de détection (SL) pour un ou plusieurs sous-pixels, chaque ligne de détection étant connectée à un ou plusieurs sous-pixels ;
un pilote de données (120) apte à fournir une tension de données (Vdata) correspondant à des données de motif de test à au moins une ligne de données (DL1-DLm), le pilote de données (120) inclut au moins deux circuits intégrés, IC, de pilotage de données (200a, 200b, 200c) aptes à fournir une tension de données (Vdata) correspondant aux données de motif de test à au moins une ligne de données (DL1-DLm) connectée aux au moins deux IC de pilotage de données (200a, 200b, 200c), chaque IC de pilotage de données inclut au moins un convertisseur analogique-numérique (220) apte à détecter au moins une tension de données (Vdata) de chacun des au moins deux IC de pilotage de données (200a, 200b, 200c) fournie à au moins une ligne de données (DL1-DLm), et à convertir les tensions de données détectées (Vsen1, Vsen2) mesurées par l'intermédiaire d'un ou plusieurs canaux de détection (CH1-CH9) correspondant aux lignes de détection (SL) en données détectées numériques (Dsen1, Dsen2) ; et
une mémoire (400) pour mémoriser une table de consultation (1020) qui inclut des informations de caractéristiques analogiques-numériques en fonction des canaux de détection ; et
un organe de commande (140) apte à effectuer :
l'acquisition de données détectées moyennes (DSEN_AVG) en fonction des IC de pilotage de données (200a, 200b, 200c) par le calcul de la moyenne d'une pluralité de données détectées obtenues depuis les un ou plusieurs convertisseurs analogiques-numériques (220) ;
la fourniture de données de compensation (Data") générées sur la base des données détectées numériques (Dsen1, Dsen2) changées en fonction de la table de consultation au pilote de données (120) connecté à au moins une ligne de données des lignes de données (DL1-DLm),
l'organe de commande (140) inclut une unité de compensation d'écart de pilote de données (1000, 1030) pour effectuer une compensation de convertisseur analogique-numérique par la mise à jour de la table de consultation (1020) sur la base de différences (Δa, Δb, Δc) entre les données détectées moyennes (DSEN_AVG) en fonction des IC de pilotage de données (200a, 200b, 200c) pour une même tension et des données de référence précédemment mémorisées (DREF) de chacun des IC de pilotage de données (200a, 200b, 200c) .

2. Dispositif d'affichage selon la revendication 1, dans lequel les mêmes données de motif de test sont fournies à des lignes de données (DL1-DLm) connectées à au moins deux IC de pilotage de données (200a, 200b, 200c) .

3. Dispositif d'affichage selon la revendication 1 ou 2, dans lequel les données de motif de test sont fournies à une ligne de données des premiers IC de pilotage de données (200a) et à une ligne de données des deuxièmes IC de pilotage de données (200b), dans lequel les deux lignes de données sont adjacentes l'une à l'autre et les premier et deuxième IC de pilotage de données (200a, 200b, 200c) sont adjacents l'un à l'autre, dans lequel au moins un convertisseur analogique-numérique (220) est apte à détecter les tensions de données (Vdata) fournies aux lignes de données adjacentes (DL1-DLm) des deux IC de pilotage de données adjacents (200a, 200b, 200c).

4. Dispositif d'affichage selon l'une quelconque des revendications 1 à 3, dans lequel le convertisseur analogique-numérique (220) est inclus dans l'un des au moins deux IC de pilotage de données (200a, 200b, 200c) ou dans l'organe de commande (140) ou chaque IC de pilotage de données inclut un convertisseur analogique-numérique (220).

5. Dispositif d'affichage selon l'une quelconque des revendications 1 à 4, dans lequel au moins une borne de sortie de chacun des au moins deux IC de pilotage de données (200a, 200b, 200c) est connectée au convertisseur analogique-numérique des IC de pilotage de données (200a, 200b, 200c).

6. Dispositif d'affichage selon la revendication 5, dans lequel le convertisseur analogique-numérique (220) est apte à détecter la tension de données fournie à au moins une ligne de données des lignes de données connectées à un convertisseur numérique-analogique (210) des au moins deux convertisseurs numériques-analogiques inclus dans l'IC de pilotage de données et/ou est apte à convertir les tensions détectées en données détectées (Dsen).

7. Dispositif d'affichage selon l'une quelconque des revendications 1 à 6, dans lequel au moins une sortie la plus extérieure de chacun des IC de pilotage de données (200a, 200b, 200c) est connectée au convertisseur analogique-numérique (220a, 220b, 220c) ou les deux sorties les plus extérieures d'un IC de pilotage de données (200a, 200b, 200c) sont connectées au convertisseur analogique-numérique (220a, 220b, 220c) inclus respectivement dans l'IC de pilotage de données (200a, 200b, 200c).

8. Dispositif d'affichage selon l'une quelconque des revendications 1 à 7, comprenant en outre une mémoire (400), dans lequel l'organe de commande (140) est apte à mémoriser une valeur de différence indiquant au moins l'une des données détectées, et une différence entre une valeur de référence sur la base des données de motif de test et les données détectées dans la mémoire (400), dans lequel les données de compensation (Data') sont calculées sur la base de la valeur de différence.

9. Dispositif d'affichage selon la revendication 8, dans lequel l'organe de commande (140) est apte à mémoriser des erreurs de sortie en fonction des IC de pilotage de données (200a, 200b, 200c) dans la mémoire (400), les erreurs de sortie étant des différences entre les données de référence (Dref) sur la base des données de motif de test et les données détectées (DDATA), et fournir des données de compensation (Data") produites par la compensation des données détectées (DDATA) avec les erreurs de sortie mémorisées en fonction des IC de pilotage de données (200a, 200b, 200c) à chacun des IC de pilotage de données (200a, 200b, 200c).

10. Dispositif d'affichage selon la revendication 8, dans lequel l'organe de commande (140) est apte à mémoriser des erreurs de sortie pour les IC de pilotage de données (200a, 200b, 200c) dans la mémoire (400), les erreurs de sortie étant des différences entre les données détectées (DDATA) des IC de pilotage de données (200a, 200b, 200c) et une moyenne des données détectées, et fournir des données de compensation produites par la compensation des données détectées avec les erreurs de sortie mémorisées en fonction des IC de pilotage de données (200a, 200b, 200c) aux circuits intégrés de pilotage de données (200a, 200b, 200c) .

11. Dispositif d'affichage selon la revendication 1, dans lequel l'organe de commande (140) est apte à compenser ensuite une tension de seuil d'un transistor à l'intérieur de chacun des sous-pixels en faisant référence à la table de consultation mise à jour (10202) après la compensation de convertisseur analogique-numérique et/ou l'organe de commande (140) est apte à compenser un écart du pilote de données (120) après la compensation de convertisseur analogique-numérique et/ou pendant un pilotage normal.

12. Dispositif d'affichage selon l'une quelconque des revendications précédentes, dans lequel le motif de données de test correspond à un motif monochrome.

13. Procédé de pilotage d'un dispositif d'affichage selon l'une des revendications précédentes comprenant les étapes de :
- la fourniture d'une tension de données (Vdata) correspondant à des données de motif de test à des lignes de données (DL1-DLm) connectées aux au moins deux IC de pilotage de données (200a, 200b, 200c) ;
- la détection d'au moins une tension de données (Vdata) de chacun des au moins deux IC de pilotage de données (200a, 200b, 200c) fournie à au moins une ligne de données des lignes de données (DL1-DLm) ; et
- la conversion des tensions de données détectées (Vsen1, Vsen2) mesurées par l'intermédiaire d'un ou plusieurs canaux de détection (CH1-CH9) correspondant aux lignes de détection (SL) en données détectées numériques (Dsen1, Dsen2) ;
- l'acquisition de données détectées moyennes (DSEN_AVG) en fonction des IC de pilotage de données (200a, 200b, 200c) par le calcul de la moyenne d'une pluralité de données détectées obtenues depuis les un ou plusieurs convertisseurs analogiques-numériques (220), chacun d'eux étant inclus dans un IC de pilotage de données correspondants (200a, 200b, 200c) ; et
- la fourniture de données de compensation (Data") générées sur la base des données détectées numériques (Dsen1, Dsen2) changées en fonction de la table de consultation, au pilote de données (120) connecté à au moins une ligne de données des lignes de données (DL1-DLm) ; et
- l'exécution d'une compensation de convertisseur analogique-numérique par la mise à jour d'une table de consultation (1020) sur la base de différences (Δa, Δb, Δc) entre les données détectées moyennes (DSEN_AVG) en fonction des IC de pilotage de données (200a, 200b, 200c) pour une même tension et des données de référence précédemment mémorisées (DREF) de chacun des IC de pilotage de données (200a, 200b, 200c).
